# EUROPEAN PATENT APPLICATION

(11) **EP 4 535 486 A1**
(43) Date of publication of application: **09.04.2025**
(21) Application number: 23815976.8
(22) Date of filing: 26.05.2023
(51) Int. Cl.: H01M 10/0562, C01B 35/12, H01B 1/06, H01B 13/00, H01M 4/13, H01M 4/36, H01M 4/62, H01M 10/054

(54) **SODIUM-BASED SOLID ELECTROLYTE, METHOD FOR PRODUCING SODIUM-BASED SOLID ELECTROLYTE, MODIFIED POSITIVE ELECTRODE ACTIVE MATERIAL, MODIFIED NEGATIVE ELECTRODE ACTIVE MATERIAL, ALL-SOLID-STATE SECONDARY BATTERY, ELECTRODE SHEET FOR ALL-SOLID-STATE SECONDARY BATTERIES, SOLID ELECTROLYTE SHEET, AND ELECTRODE FOR ALL-SOLID-STATE SECONDARY BATTERIES**

(30) Priority: 01.06.2022 JP 2022089873
(71) Applicant: FUJIFILM Corporation, Tokyo 106-8620 (JP); Institute of Science Tokyo, Tokyo 152-8550 (JP)
(72) Inventor: OKUNO Yukihiro, Ashigarakami-gun, Kanagawa 258-8577 (JP); YASUI Shintaro, Tokyo 152-8550 (JP); SHIRATORI Yosuke, Ashigarakami-gun, Kanagawa 258-8577 (JP); SAITO Kengo, Ashigarakami-gun, Kanagawa 258-8577 (JP); WATANABE Kenta, Ashigarakami-gun, Kanagawa 258-8577 (JP)
(74) Representative: HGF
(86) International application number: PCT/JP2023/019752
(87) International publication number: WO 2023/234219

(57) **Abstract**

An object of the present invention is to provide a sodium-based solid electrolyte having excellent ion conductivity, a method for producing a sodium-based solid electrolyte, a modified positive electrode active material, a modified negative electrode active material, a solid-state secondary battery, an electrode sheet for a solid-state secondary battery, a solid electrolyte sheet, and an electrode for a solid-state secondary battery.

The sodium-based solid electrolyte of the present invention contains amorphous sodium tetraborate, water, and a sodium salt.

## Description

### BACKGROUND OF THE INVENTION

### 1. Field of the Invention

The present invention relates to a sodium-based solid electrolyte, a method for producing a sodium-based solid electrolyte, a modified positive electrode active material, a modified negative electrode active material, a solid-state secondary battery, an electrode sheet for a solid-state secondary battery, a solid electrolyte sheet, and an electrode for a solid-state secondary battery.

### 2. Description of the Related Art

In the related art, a liquid electrolyte having high ion conductivity has been used in a lithium ion secondary battery. However, since the liquid electrolyte is flammable, there is a problem in safety. In addition, since the organic solvent is liquid, it is difficult to make the battery compact, and there is also a problem of limitation on capacity in a case where the battery is large.

In order to solve the above-described problems, development of a solid-state lithium ion secondary battery using a solid electrolyte is in progress as one of next-generation batteries. In the solid-state lithium ion secondary battery, a solid electrolyte having favorable ion conductivity is required in order to obtain desired charging and discharging characteristics.

On the other hand, there is a concern about problems such as a rise in raw material cost and resource depletion of lithium used in the lithium ion secondary battery. Therefore, sodium ions have attracted attention as a substitute for lithium ions, and development of a solid-state sodium ion secondary battery is also in progress.

For example, WO2018/225494A discloses a solid-state sodium ion secondary battery including a solid electrolyte layer consisting of a sodium ion-conductive oxide, a positive electrode layer, a negative electrode layer, and a collector layer which is provided on a main surface of at least one of the positive electrode layer or the negative electrode layer and is composed of a predetermined metal material.

### SUMMARY OF THE INVENTION

As a result of studying a solid electrolyte used in a secondary battery such as the solid-state sodium ion secondary battery with reference to WO2018/225494A, it is found that there is room for further improvement in ion conductivity of the solid electrolyte.

An object of the present invention is to provide a sodium-based solid electrolyte having excellent ion conductivity.

Another object of the present invention is to provide a method for producing a sodium-based solid electrolyte, a modified positive electrode active material, a modified negative electrode active material, a solid-state secondary battery, an electrode sheet for a solid-state secondary battery, a solid electrolyte sheet, and an electrode for a solid-state secondary battery.

As a result of intensive studies to solve the above-described problems, the present inventors have completed the present invention having the following configurations.
(1) A sodium-based solid electrolyte comprising:
   amorphous sodium tetraborate;
   water; and
   a sodium salt.
(2) The sodium-based solid electrolyte according to (1),
   in which a molar ratio of the sodium salt to the sodium tetraborate is 0.001 to 1.5, and
   a molar ratio of the water to the sodium tetraborate is 1 to 15.
(3) The sodium-based solid electrolyte according to (1) or (2),
   in which the sodium salt is a compound represented by Formula (1) described later.
(4) A sodium-based solid electrolyte containing Na, B, and O,
   in which the sodium-based solid electrolyte further contains one or more specific elements selected from the group consisting of an element of Group 4 of the periodic table, an element of Group 15 of the periodic table, an element of Group 16 of the periodic table, an element of Group 17 of the periodic table, Si, C, Sc, and Y, and
   in a case where molar amounts of Na, O, and the specific elements in the sodium-based solid electrolyte are represented by setting a molar amount of B to 4.0, the molar amount of Na is 1.6 to 3.5, the molar amount of O is 6.2 to 25.0, and each molar amount of the specific elements is 0.01 to 10.0.
(5) A method for producing the sodium-based solid electrolyte according to any one of (1) to (4), the method comprising:
   a step 1 of subjecting a sodium-based oxide containing Na and B to a mechanical milling treatment;
   a step 2 of mixing the product obtained in the step 1 with water; and
   a step 3 of removing water from the dispersion liquid obtained in the step 2 to obtain the sodium-based solid electrolyte,
   in which any one of requirements 1 to 3 described later is satisfied.
(6) The method for producing the sodium-based solid electrolyte according to (5),
   in which the requirement 1 is satisfied, and
   the method further includes, before the step 1, a step 0 of subjecting a sodium-based oxide containing Na and B to a mechanical milling treatment in an environment in which a specific element source described later is not present.
(7) A modified positive electrode active material comprising:
   a positive electrode active material; and
   a coating layer disposed on the positive electrode active material,
   in which the coating layer contains the sodium-based solid electrolyte according to any one of (1) to (4).
(8) A modified negative electrode active material comprising:
   a negative electrode active material; and
   a coating layer disposed on the negative electrode active material,
   in which the coating layer contains the sodium-based solid electrolyte according to any one of (1) to (4).
(9) A solid-state secondary battery comprising, in the following order:
   a positive electrode active material layer;
   a solid electrolyte layer; and
   a negative electrode active material layer,
   in which at least one of the positive electrode active material layer, the solid electrolyte layer, or the negative electrode active material layer contains the sodium-based solid electrolyte according to any one of (1) to (4).
(10) An electrode sheet for a solid-state secondary battery, comprising:
   the sodium-based solid electrolyte according to any one of (1) to (4).
(11) A solid electrolyte sheet comprising:
   the sodium-based solid electrolyte according to any one of (1) to (4).
(12) An electrode for a solid-state secondary battery, comprising:
   an active material layer containing an active material and the sodium-based solid electrolyte according to any one of (1) to (4); and
   a collector.

According to the present invention, it is possible to provide a sodium-based solid electrolyte having excellent ion conductivity.

In addition, according to the present invention, it is possible to provide a method for producing a sodium-based solid electrolyte, a modified positive electrode active material, a modified negative electrode active material, a solid-state secondary battery, an electrode sheet for a solid-state secondary battery, a solid electrolyte sheet, and an electrode for a solid-state secondary battery.

### BRIEF DESCRIPTION OF THE DRAWINGS

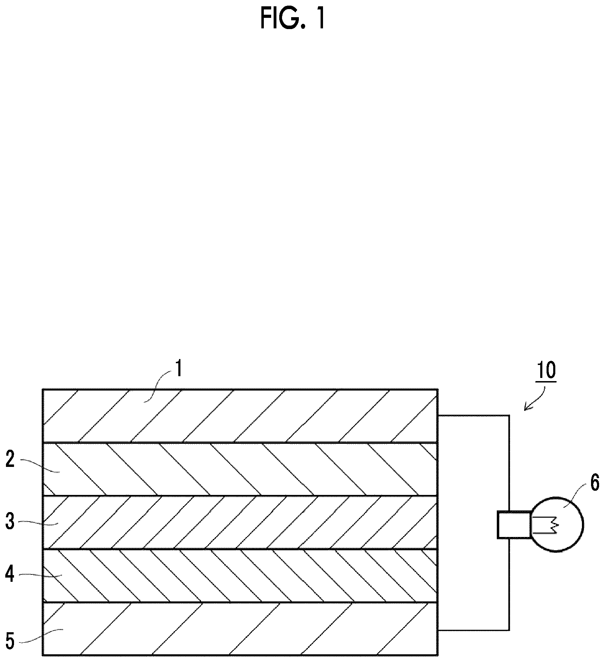

Fig. 1 is a cross-sectional view schematically showing a solid-state sodium ion secondary battery according to a preferred embodiment of the present invention.

### DESCRIPTION OF THE PREFERRED EMBODIMENTS

Hereinafter, the present invention will be described in detail.

Any numerical range expressed using "to" in the present specification refers to a range including the numerical values before and after the "to" as a lower limit value and an upper limit value, respectively.

A feature point of a first embodiment of the sodium-based solid electrolyte according to the present invention is that the sodium-based solid electrolyte contains a predetermined amount of various elements. In particular, a content of O (oxygen element) is relatively large and a predetermined amount of two or more specific elements are contained. It is conceived that O is present as water or an OH group in addition to as BO₃ or BO₄ in the sodium-based solid electrolyte, and it is presumed that a hydrated layer having favorable ion conductivity is formed on a surface side of the sodium-based solid electrolyte due to the large content of O. In addition, such a sodium-based solid electrolyte is also excellent in bonding property, and it is presumed that this point also contributes to the improvement of the ion conductivity.

In addition, a feature point of a second embodiment of the sodium-based solid electrolyte according to the present invention is that amorphous sodium tetraborate is mixed and used with a predetermined component (water and a sodium salt). It is presumed that, in a case where the amorphous sodium tetraborate is used in combination with a predetermined component, a soft hydrated layer is easily formed on a surface of the sodium tetraborate, a large amount of sodium derived from the sodium salt is contained in the hydrated layer, and as a result, the ion conductivity is improved.

Hereinafter, each embodiment of the sodium-based solid electrolyte according to the present invention will be described in detail.

### <<First embodiment>>

The first embodiment of the sodium-based solid electrolyte according to the present invention contains Na (sodium element), B (boron element), and O (oxygen element).

In addition, the first embodiment of the sodium-based solid electrolyte according to the present invention further contains one or more specific elements selected from the group consisting of an element of Group 4 of the periodic table, an element of Group 15 of the periodic table, an element of Group 16 of the periodic table, an element of Group 17 of the periodic table, Si (silicon element), C (carbon element), Sc (scandium element), and Y (yttrium element).

In addition, in the first embodiment of the sodium-based solid electrolyte according to the present invention, from the viewpoint that ion conductivity is more excellent (hereinafter, also simply referred to as "viewpoint that the effect of the present invention is more excellent"), it is preferable that the sodium-based solid electrolyte contains one or more specific elements selected from the group consisting of F (fluorine element), Cl (chlorine element), Br (bromine element), I (iodine element), S (sulfur element), P (phosphorus element), Si (silicon element), Se (selenium element), Te (tellurium element), C (carbon element), Sb (antimony element), As (arsenic element), Sc (scandium element), Y (yttrium element), Zr zirconium element), Ti (titanium element),Hf (hafnium element), and N (nitrogen element).

Examples of the element of Group 4 of the periodic table include Ti, Zr, Hr, and Rf.

Examples of the element of Group 15 of the periodic table include N, P, As, Sb, Bi, and Mc.

Examples of the element of Group 16 of the periodic table S, Se, Te, Po, and Lv.

Examples of the element of Group 17 of the periodic table include F, Cl, Br, I, At, and Ts.

The specific element contained in the first embodiment of the sodium-based solid electrolyte according to the present invention may be two or more kinds. Among these, from the viewpoint that the effect of the present invention is more excellent, the number of kinds of the specific elements contained in the sodium-based solid electrolyte is preferably 2 or more, more preferably 2 to 5, and still more preferably 2 to 4.

The first embodiment of the sodium-based solid electrolyte according to the present invention preferably contains two or more specific elements selected from the group consisting of F, S, N, P, and C; more preferably contains two or more specific elements selected from the group consisting of F, S, C, and N; and still more preferably contains three specific elements of F, S, and N.

As will be described later, in a case of producing the first embodiment of the sodium-based solid electrolyte according to the present invention, it is preferable to use sodium tetraborate as a raw material. In this case, the sodium tetraborate used is usually a compound represented by Na₂B₄O₇ and is mainly a compound composed of Na, B, and O, but in the present invention, it may deviate from the standard value. More specifically, the sodium tetraborate is preferably a compound represented by Na₂₊ₓB_{4+y}O_{7+z} (-0.3 < x < 0.3, -0.3 < y < 0.3, -0.3 < z < 0.3). That is, in a case where a molar amount of Na is represented by setting a molar amount of B to 4.0, it is preferable that the molar amount of Na is 1.6 to 2.5 and a molar amount of O is 6.2 to 7.9. In other words, assuming that the molar content amount of B is set to 4.0, it is preferable that the relative value of the molar content amount of Na is 1.6 to 2.5 and the molar amount of O is 6.2 to 7.9.

In the first embodiment of the sodium-based solid electrolyte according to the present invention, in a case where a molar amount of Na in the sodium-based solid electrolyte is represented by setting the molar amount of B to 4.0, the molar amount of Na is 1.6 to 3.5. That is, in a case where the molar content amount of B is set to 4.0, the relative value of the molar content amount of Na is 1.6 to 3.5.

Among these, from the viewpoint that the effect of the present invention is more excellent, in a case where the molar amount of Na in the sodium-based solid electrolyte is represented by setting the molar amount of B to 4.0, the molar amount of Na is preferably 1.6 to 3.2, more preferably 1.9 to 3.2, and still more preferably 2.0 to 3.2.

In the first embodiment of the sodium-based solid electrolyte according to the present invention, in a case where a molar amount of O in the sodium-based solid electrolyte is represented by setting the molar amount of B to 4.0, the molar amount of O is 6.2 to 25.0. That is, in a case where the molar content amount of B is set to 4.0, the relative value of the molar content amount of O is 6.2 to 25.0.

Among these, from the viewpoint that the effect of the present invention is more excellent, in a case where the molar amount of O in the sodium-based solid electrolyte is represented by setting the molar amount of B to 4.0, the molar amount of O is preferably 8.0 to 23.0 and preferably 10.0 to 23.0.

In the first embodiment of the sodium-based solid electrolyte according to the present invention, in a case where a molar amount of the specific elements in the sodium-based solid electrolyte is represented by setting the molar amount of B to 4.0, each molar amount of the specific elements is 0.01 to 10.0. That is, in a case where the molar content amount of B is set to 4.0, the relative value of each molar content amount of the specific elements is 0.01 to 10.0.

Among these, from the viewpoint that the effect of the present invention is more excellent, in a case where the molar amount of the specific elements in the sodium-based solid electrolyte is represented by setting the molar amount of B to 4.0, each molar amount of the specific elements is preferably 0.01 to 6.0, more preferably 0.1 to 5.0, and still more preferably 0.1 to 3.0.

As described above, the first embodiment of the sodium-based solid electrolyte according to the present invention contains two or more kinds of the specific elements. Therefore, for example, in a case where the first embodiment of the sodium-based solid electrolyte according to the present invention contains two specific elements of a specific element A and a specific element B which is an element different from the specific element A, assuming that the molar amount of B in the sodium-based solid electrolyte is 4.0, each of the molar amount of the specific element A and the molar amount of the specific element B is 0.01 to 10.0. In addition, for example, in a case where the first embodiment of the sodium-based solid electrolyte according to the present invention contains three specific elements of a specific element A, a specific element B which is an element different from the specific element A, and a specific element C which is an element different from the specific elements A and B, assuming that the molar amount of B in the sodium-based solid electrolyte is 4.0, each of the molar amount of the specific element A, the molar amount of the specific element B, and the molar amount of the specific element C is 0.01 to 10.0.

Contents of Na, B, and the specific elements in the first embodiment of the sodium-based solid electrolyte according to the present invention are specified by known element analysis. As a method of the element analysis, for example, Na and B are analyzed by inductively coupled plasma optical emission spectrometry (ICP-OES); N and the like, which are one kind of the specific element, are analyzed by an inert gas melting method; and F and S, which are one kind of the specific element, are analyzed by combustion ion chromatography. Regarding O, analyzed masses of elements other than O are added together, and the content of O can be calculated as a difference between the analyzed masses and the total amount of the powder. The method of calculating the content of each element is not limited to those described above, and from an analysis result of a content of one kind of element, a content of another element may be estimated in consideration of the structure of the compound to be used.

From the content of each element calculated by the element analysis, the molar amounts of Na, O, and the specific elements in a case where the molar amount of B is set to 4.0 are calculated.

As one suitable aspect of composition of the first embodiment of the sodium-based solid electrolyte according to the present invention, the sodium-based solid electrolyte contains Na, B, O, F, S, and N, in which, in a case where a molar amount of B is set to 4.0, a molar amount of Na is 1.6 to 3.5 (preferably 1.6 to 3.0), a molar amount of O is 6.2 to 25.0, a molar amount of F is 0.01 to 10.0, a molar amount of S is 0.01 to 2.0, and a molar amount of N is 0.01 to 1.0.

A suitable range of the molar ratio of each of the above-described elements is as described above.

The first embodiment of the sodium-based solid electrolyte according to the present invention may contain an element other than Na, B, O, and the specific element.

Although a method for producing the first embodiment of the sodium-based solid electrolyte according to the present invention will be described in detail later, it is preferable that the sodium-based solid electrolyte according to the embodiment of the present invention is produced by a production method accompanied by a mechanical milling treatment. For example, in a case where a raw material (for example, a sodium-based oxide containing Na and B) of the first embodiment of the sodium-based solid electrolyte according to the present invention is subjected to a mechanical milling treatment, it is presumed that a crystalline component in the raw material can be non-crystalized, and as a result, a hydrated layer having excellent ion conductivity is easily formed.

In the first embodiment of the sodium-based solid electrolyte according to the present invention, from the viewpoint that the effect of the present invention is more excellent, it is preferable that a peak derived from Na₂B₄O₇ crystals is not present in an X-ray diffraction pattern obtained from an X-ray diffraction measurement using a CuKα ray.

In the present specification, the "peak derived from Na₂B₄O₇ crystals is not present" means that a peak derived from sodium tetraborate crystals, in which a peak top is located in a range where a diffraction angle 2θ of the X-ray diffraction pattern is 5.0° to 70.0° and an intensity ratio obtained by the following intensity measuring method is 10.0 or more, is not present.

Intensity measuring method: in an X-ray diffraction pattern of the sodium-based solid electrolyte obtained from the X-ray diffraction measurement using a CuKα ray, an average intensity in a diffraction angle 2θ range of 5.0° to 70.0° is calculated. A ratio of a peak intensity of a target peak at the peak top to the calculated average intensity (peak intensity of target peak/average intensity) is defined as the intensity ratio.

In other words, in a case where the above-described intensity ratio of the peak derived from the sodium tetraborate crystals, in which the peak top is located in the range where the diffraction angle 2θ of the X-ray diffraction pattern is 5.0° to 70.0°, is less than 10.0, it is assumed that the peak derived from the Na₂B₄O₇ crystals does not exist in the sodium-based solid electrolyte.

The above-described X-ray diffraction measurement is performed using a CuKα ray under measurement conditions of 0.01 °/step and 3 °/min.

Among these, in the first embodiment of the sodium-based solid electrolyte according to the present invention, from the viewpoint that the effect of the present invention is more excellent, it is preferable that the peak derived from sodium tetraborate crystals, in which the peak top is located in the range where the diffraction angle 20 of the X-ray diffraction pattern described above is 5.0° to 70.0° and the above-described intensity ratio is 8.0 or more, is not present; it is more preferable that the peak in which the above-described intensity ratio is 5.0 or more is not present; it is still more preferable that the peak in which the above-described intensity ratio is 3.0 or more is not present; and it is particularly preferable that the peak in which the above-described intensity ratio is 2.0 or more is not present.

Examples of the sodium tetraborate crystals include α-type crystals of an anhydride (Na₂B₄O₇), γ-type crystals of an anhydride (Na₂B₄O₇), crystals of a tetrahydrate (Na₂B₄O₇·4H₂O), crystals of a pentahydrate (Na₂B₄O₇·5H₂O or Na₂B₄O₅(OH)₄·3H₂O), and crystals of a decahydrate (Na₂B₄O₇·10H₂O or Na₂B₄O₅(OH)₄·8H₂O).

Hereinafter, peak positions and crystal planes of the peak derived from the sodium tetraborate crystals, which are measured by the X-ray diffraction measurement using a CuKα ray, will be exemplified for each crystal. The "peak position" means a diffraction angle 2θ (°) at the peak top of the peak.

Examples of the peak derived from the α-type crystals of the sodium tetraborate anhydride include a peak derived from a (011) plane, which appears at a peak position in a range of 13.5° to 13.9°, a peak derived from a (102) plane, which appears at a peak position in a range of 22.5° to 22.9°, and a peak derived from a (202) plane, which appears at a peak position in a range of 33.4° to 33.8°.

Examples of the peak derived from the γ-type crystals of the sodium tetraborate anhydride include a peak derived from a (02-2) plane, which appears at a peak position in a range of 20.9° to 21.3°, a peak derived from a (2-1-2) plane, which appears at a peak position in a range of 29.8° to 30.2°, and a peak derived from a (210) plane, which appears at a peak position in a range of 32.2° to 32.6°.

Examples of the peak derived from the crystals of the sodium tetraborate tetrahydrate include a peak derived from a (011) plane, which appears at a peak position in a range of 11.0° to 11.4°, a peak derived from a (002) plane, which appears at a peak position in a range of 11.8° to 12.2°, and a peak derived from a (200) plane, which appears at a peak position in a range of 26.3° to 26.7°.

Examples of the peak derived from the crystals of the sodium tetraborate pentahydrate include a peak derived from a (202) plane, which appears at a peak position in a range of 20.1° to 20.5°, a peak derived from a (31-2) plane, which appears at a peak position in a range of 25.7° to 26.1°, and a peak derived from a (303) plane, which appears at a peak position in a range of 30.4° to 30.8°.

Examples of the peak derived from the crystals of sodium tetraborate decahydrate (also known as borax) include a peak derived from a (021) plane, which appears at a peak position in a range of 15.4° to 15.8°, a peak derived from a (022) plane, which appears at a peak position in a range of 18.1° to 18.5°, and a peak derived from a (132) plane, which appears at a peak position in a range of 31.4° to 31.8°. In addition, a peak derived from a (33-2) plane, which appears at a peak position in a range of 34.8° to 35.2° is exemplified.

### <<Second embodiment>>

A second embodiment of the sodium-based solid electrolyte according to the present invention contains amorphous sodium tetraborate, water, and a sodium salt.

Hereinafter, each component will be described in detail.

### (Amorphous sodium tetraborate)

The sodium tetraborate contained in the second embodiment is usually a compound represented by Na₂B₄O₇ and is mainly a compound composed of Na, B, and O, but in the present invention, it may deviate from the standard value. More specifically, the sodium tetraborate is preferably a compound represented by Na₂₊ₓB_{4+y}O_{7+z} (-0.3 < x < 0.3, -0.3 < y < 0.3, -0.3 < z < 0.3).

In addition, the sodium tetraborate contained in the second embodiment of the sodium-based solid electrolyte according to the present invention is in an amorphous state.

The amorphous sodium tetraborate (hereinafter, also referred to as "specific sodium tetraborate") is sodium tetraborate in which a peak derived from Na₂B₄O₇ crystals is not present in an X-ray diffraction pattern obtained from an X-ray diffraction measurement using a CuKα ray. That is, in the X-ray diffraction pattern of the specific sodium tetraborate obtained from the X-ray diffraction measurement using a CuKα ray, there is no peak derived from the sodium tetraborate crystals, in which the peak top is located in a range where the diffraction angle 2θ is 5.0° to 70.0° and an intensity ratio obtained by the intensity measuring method described in the first embodiment is 10.0 or more.

The above-described X-ray diffraction measurement is performed using a CuKα ray under measurement conditions of 0.01 °/step and 3 °/min.

Among these, in the specific sodium tetraborate, from the viewpoint that the effect of the present invention is more excellent, it is preferable that the peak derived from sodium tetraborate crystals, in which the peak top is located in the range where the diffraction angle 20 of the X-ray diffraction pattern described above is 5.0° to 70.0° and the above-described intensity ratio is 8.0 or more, is not present; it is more preferable that the peak in which the above-described intensity ratio is 5.0 or more is not present; it is still more preferable that the peak in which the above-described intensity ratio is 3.0 or more is not present; and it is particularly preferable that the peak in which the above-described intensity ratio is 2.0 or more is not present.

Specific examples of the sodium tetraborate crystals, and the peak positions and the crystal planes of the peak derived from the sodium tetraborate crystals measured by the X-ray diffraction measurement using a CuKα ray are as described above in the first embodiment.

A content of the specific sodium tetraborate in the second embodiment of the sodium-based solid electrolyte according to the present invention is not particularly limited.

Although a method for producing the specific sodium tetraborate will be described in detail later, it is preferable that the specific sodium tetraborate is produced by a production method accompanied by a mechanical milling treatment. Examples of the mechanical milling treatment performed on the sodium tetraborate include a mechanical milling treatment performed in a step 1A described later, the details of which will be described later.

It is presumed that, in a case where the sodium tetraborate is subjected to a mechanical milling treatment, the sodium tetraborate can be non-crystalized, and as a result, a hydrated layer having excellent ion conductivity is easily formed.

### (Water)

The second embodiment of the sodium-based solid electrolyte according to the present invention contains water.

A content of the water in the second embodiment of the sodium-based solid electrolyte according to the present invention is not particularly limited. Among these, in the second embodiment of the sodium-based solid electrolyte according to the present invention, from the viewpoint that the effect of the present invention is more excellent, a molar ratio of the water to the specific sodium tetraborate (molar amount of water/molar amount of specific sodium tetraborate) is preferably 1 to 15, more preferably 1 to 13, still more preferably 1 to 10, particularly preferably 2 to 8, and most preferably 2 to 6.

### (Sodium salt)

The second embodiment of the sodium-based solid electrolyte according to the present invention contains a sodium salt.

The type of the sodium salt is not particularly limited, and examples thereof include a sodium salt exemplified in a step 1A described later, the details of which will be described later.

A content of the sodium salt in the second embodiment of the sodium-based solid electrolyte according to the present invention is not particularly limited.

In the second embodiment of the sodium-based solid electrolyte according to the present invention, a mass ratio of the content of the sodium salt to the content of the above-described specific sodium tetraborate (content mass of sodium salt/content mass of specific sodium tetraborate) is not particularly limited. Among these, in the second embodiment of the sodium-based solid electrolyte according to the present invention, from the viewpoint that the effect of the present invention is more excellent, a molar ratio of the sodium salt to the specific sodium tetraborate (molar amount of sodium salt/molar amount of specific sodium tetraborate) is preferably 0.001 to 1.5, more preferably 0.001 to 1.2, still more preferably 0.01 to 1.2, particularly preferably 0.1 to 1.2, and most preferably 0.5 to 1.2.

The molar ratio of each component in the second embodiment of the sodium-based solid electrolyte according to the present invention can be determined by a known method. For example, the element analysis described in the first embodiment above may be used.

### <Method for producing sodium-based solid electrolyte>

The method for producing the sodium-based solid electrolyte (the first embodiment and the second embodiment) according to the embodiment of the present invention is not particularly limited, but from the viewpoint that the sodium-based solid electrolyte according to the embodiment of the present invention can be produced with high productivity, a production method including the following steps 1A to 3A is preferable.
Step 1A: step of subjecting a sodium-based oxide containing Na and B to a mechanical milling treatment in the presence of a specific element source containing one or more elements selected from a specific element group
Step 2A: step of mixing the product obtained in the step 1A with water
Step 3A: step of removing water from the dispersion liquid obtained in the step 2A to obtain a sodium-based solid electrolyte

Hereinafter, the procedure of the above-described production method will be described in detail.

### (Step 1A)

The step 1A is a step of subjecting a sodium-based oxide containing Na and B to a mechanical milling treatment in the presence of a specific element source.

Hereinafter, a material used in the present step 1A will be described in detail, and then the procedure will be described in detail.

The specific element source contains one or more elements selected from the group consisting of an element of Group 4 of the periodic table, an element of Group 15 of the periodic table, an element of Group 16 of the periodic table, an element of Group 17 of the periodic table, Si, C, Sc, and Y. Among these, the specific element source contains one or more elements selected from the group consisting of F, Cl, Br, I, S, P, Si, Se, Te, C, Sb, As, Sc, Y, Zr, Ti, Hf, and N. It is sufficient that the specific element source contains one or more elements among the above-described elements, and the specific element source may be composed of one compound or may be composed of two or more compounds. For example, the specific element source may be composed of a compound containing one or more elements selected from the group consisting of F, Cl, Br, I, S, P, Si, Se, Te, C, Sb, As, Sc, Y, Zr, Ti, Hf, and N; or may be composed of a compound 1 containing at least one element selected from the group consisting of F, Cl, Br, I, S, P, Si, Se, Te, C, Sb, As, Sc, Y, Zr, Ti, Hf, and N, and a compound 2 containing an element selected from the above group, in which the kind of the element is different from the kind of the element selected from the above group contained in the compound 1.

The specific element source preferably contains two or more elements selected from the group consisting of an element of Group 4 of the periodic table, an element of Group 15 of the periodic table, an element of Group 16 of the periodic table, an element of Group 17 of the periodic table, Si, C, Sc, and Y; more preferably contains two to five elements thereof; and still more preferably contains two to four elements thereof.

The specific element source preferably contains two to four elements selected from the group consisting of F, Cl, Br, I, S, P, Si, Se, Te, C, Sb, As, Sc, Y, Zr, Ti, Hf, and N; and more preferably contains three elements thereof.

The compound contained in the specific element source is preferably a salt, and more preferably a sodium salt (particularly, a sodium imide salt).

The sodium salt is preferably a compound represented by Formula (1).

Formula (1) NaN(R_{f1}SO₂)(R_{f2}SO₂)

R_{f1} and R_{f2} each independently represent a halogen atom or a perfluoroalkyl group.

In a case where R_{f1} and R_{f2} are a perfluoroalkyl group, the number of carbon atoms in the perfluoroalkyl group is not particularly limited.

R_{f1} and R_{f2} are preferably a halogen atom or a perfluoroalkyl group having 1 to 6 carbon atoms, more preferably a halogen atom or a perfluoroalkyl group having 1 or 2 carbon atoms, and still more preferably a halogen atom. As the volume of the terminal group increases, the steric hindrance increases, which is a factor that hinders ion conduction. Therefore, in a case where R_{f1} and R_{f2} are a perfluoroalkyl group, the perfluoroalkyl group preferably has a small number of carbon atoms.

Hereinafter, the compound contained in the specific element source will be exemplified. Among compounds exemplified below, a compound containing only one specific element may be used together with another compound containing at least one kind of another specific element, so that two or more specific elements are contained in the specific element source as described above.
(L-1) Inorganic sodium salt: inorganic fluoride salts such as NaPF₆, NaBF₄, NaAsF₆, and NaSbF₆; perhalogenates such as NaClO₄ and NaIO₄; and inorganic chloride salts such as NaAlCl₄
(L-2) Fluorine-containing organic sodium salt: perfluoroalkanesulfonates such as NaCF₃SO₃; perfluoroalkanesulfonylimide salts such as NaN(CF₃SO₂)₂, NaN(CF₃CF₂SO₂)₂, NaN(FSO₂)₂, and NaN(CF₃SO₂)(C₄F₉SO₂); and perfluoroalkanesulfonylmethide salts such as NaC(CF₃SO₂)₃
(L-3) Oxalatoborate salt: sodium bis(oxalato)borate and sodium difluorooxalatoborate

In addition to the above, NaF, NaCl, NaBr, NaI, Na₂SO₄, NaNO₃, Na₂CO₃, CH₃COONa, and the like are exemplified.

Among these, NaPF₆, NaBF₄, NaAsF₆, NaSbF₆, NaClO₄, Na(R^{f1}SO₃), NaN(R_{f1}SO₂)₂, NaN(FSO₂)₂, or NaN(R^{f1}SO₂)(R^{f2}SO₂) is preferable; and NaPF₆, NaBF₄, NaN(R^{f1}SO₂)₂, NaN(FSO₂)₂, or NaN(R^{f1}SO₂)(R^{f2}SO₂) is more preferable.

Here, R^{f1} and R^{f2} each independently represent a perfluoroalkyl group.

An amount of the specific element source used is not particularly limited, and is appropriately adjusted such that the above-described sodium-based solid electrolyte according to the embodiment of the present invention is obtained.

Among these, the amount of the specific element source used is preferably 1 to 300 parts by mass and more preferably 100 to 200 parts by mass with respect to 100 parts by mass of the sodium-based oxide containing Na and B.

Examples of the sodium-based oxide containing Na and B include Na₂B₄O₇, Na₂B₈O₁₃, Na₂B₆O₁₀, and Na₃B₇O₁₂.

The mechanical milling treatment is a treatment of pulverizing a sample while applying mechanical energy.

Examples of the mechanical milling treatment include a ball mill, a vibration mill, a turbo mill, and a disc mill, and from the viewpoint that the sodium-based solid electrolyte according to the embodiment of the present invention can be produced with high productivity, a ball mill is preferable. Examples of the ball milling include vibration ball milling, rotary ball milling, and planetary ball milling, and planetary ball milling is more preferable.

As conditions for the ball mill treatment, the optimum conditions are selected depending on raw materials to be used.

A material of pulverization balls (media) to be used at the time of ball milling is not particularly limited; and examples thereof include agate, silicon nitride, stabilized zirconia (YSZ), alumina, and an iron-based alloy; and stabilized zirconia (YSZ) is preferable from the viewpoint that the sodium-based solid electrolyte according to the embodiment of the present invention can be produced with high productivity.

An average particle diameter of the pulverization balls is not particularly limited, but from the viewpoint that the sodium-based solid electrolyte according to the embodiment of the present invention can be produced with high productivity, it is preferably 1 to 10 mm and more preferably 3 to 7 mm. The above-described average particle diameter is obtained by randomly measuring diameters of 50 pulverization balls and arithmetically averaging the measured values. In a case where the pulverization balls are not spherical, a major axis is taken as the diameter.

The number of pulverization balls used at the time of ball milling is not particularly limited, but from the viewpoint that the sodium-based solid electrolyte according to the embodiment of the present invention can be produced with high productivity, it is preferably 10 to 100 and more preferably 40 to 60.

A material of a pulverization pot to be used at the time of ball milling is not particularly limited; and examples thereof include agate, silicon nitride, stabilized zirconia (YSZ), alumina, and an iron-based alloy; and stabilized zirconia (YSZ) is preferable from the viewpoint that the sodium-based solid electrolyte according to the embodiment of the present invention can be produced with high productivity.

A rotation speed at the time of ball milling is not particularly limited, but from the viewpoint that the sodium-based solid electrolyte according to the embodiment of the present invention can be produced with high productivity, it is preferably 200 to 700 rpm and more preferably 350 to 550 rpm.

A treatment time of the ball milling is not particularly limited, but from the viewpoint that the sodium-based solid electrolyte according to the embodiment of the present invention can be produced with high productivity, it is preferably 10 to 200 hours and more preferably 20 to 140 hours.

The atmosphere during the ball milling may be an atmosphere of atmospheric air, or may be an atmosphere of an inert gas (for example, argon, helium, or nitrogen).

### (Step 2A)

The step 2A is a step of mixing the product obtained in the step 1A with water. In a case of performing the present step, water is mixed with the sodium-based oxide containing Na and B, which is obtained in the step 1A by being subjected to the mechanical milling treatment, and the sodium-based solid electrolyte according to the embodiment of the present invention, which contains a large amount of O (oxygen element), is generated.

An amount of water used is not particularly limited, but from the viewpoint that the effect of the present invention is more excellent, it is preferably 10 to 200 parts by mass and more preferably 50 to 150 parts by mass with respect to 100 parts by mass of the product obtained in the step 1A.

The method of mixing the product obtained in the step 1A with the water is not particularly limited, and the mixing may be performed in a batchwise manner or may be performed such that the water is added stepwise to the product obtained in the step 1A.

In the mixing, an ultrasonic treatment may be performed as necessary.

A time of the ultrasonic treatment is not particularly limited, but from the viewpoint that the effect of the present invention is more excellent, it is preferably 10 minutes to 5 hours.

### (Step 3A)

The step 3A is a step of removing water from the dispersion liquid obtained in the step 2A to obtain a sodium-based solid electrolyte.

In the present step, water may be removed from the dispersion liquid such that the sodium-based solid electrolyte is formed and water remains in the sodium-based solid electrolyte. That is, in the step 3A, a step of removing a part of the water in the dispersion liquid to obtain a predetermined sodium-based solid electrolyte may be performed so that the above-described sodium-based solid electrolyte containing water is obtained.

The method of removing the water from the dispersion liquid obtained in the step 2A is not particularly limited, and the water may be evaporated by a heating treatment or may be evaporated by a vacuum drying treatment. By adjusting the amount of water removed within the above-described range, the content of water contained in the sodium-based solid electrolyte can be appropriately adjusted.

In the present step, it is preferable to dry the above-described dispersion liquid under a vacuum condition to obtain the sodium-based solid electrolyte containing water. The vacuum condition means that a drying treatment is performed at a predetermined temperature under a predetermined decompression environment. Examples of more specific vacuum condition include a condition of 20 Pa or less and 40°C or lower. The lower limit value of the above-described pressure is not particularly limited, and is, for example, 10 Pa or more. In addition, the lower limit value of the above-described temperature is not particularly limited, and is, for example, 20°C or higher.

The treatment time of the vacuum drying treatment may be appropriately selected depending on the pressure and the temperature described above, the amount of water contained in the dispersion liquid, the target moisture content of the sodium-based solid electrolyte, and the like; and is, for example, 120 to 900 minutes.

In a case of producing the sodium-based solid electrolyte by the production method including the steps 1A to 3A (a production method including steps 1 to 3 described later and satisfying a requirement 1 described later), a step 0 of subjecting a sodium-based oxide containing Na and B to a mechanical milling treatment in an environment in which the specific element source is not present may be performed before the step 1A, and it is preferable to perform the step 0.

A suitable aspect of the mechanical milling treatment performed in the step 0 is the same as the suitable aspect of the mechanical milling treatment performed in the step 1A described above.

### (Steps 1B to 3B)

Another suitable aspect of the method for producing the sodium-based solid electrolyte according to the embodiment of the present invention is preferably a production method including the following steps 1B to 3B.
Step 1B: step of subjecting a sodium-based oxide containing Na and B to a mechanical milling treatment
Step 2B: step of mixing the product obtained in the step 1B with water and the specific element source
Step 3B: step of removing water from the dispersion liquid obtained in the step 2B to obtain a sodium-based solid electrolyte

The difference between the step 1B and the step 1A is exemplified that the mechanical milling treatment is performed in the presence of the specific element source in the step 1A, whereas the mechanical milling treatment is performed without using the specific element source in the step 1B.

A suitable aspect of the mechanical milling treatment performed in the step 1B is the same as the suitable aspect of the mechanical milling treatment performed in the step 1A.

The difference between the step 2B and the step 2A is exemplified that, in the step 2B, the product obtained in the step 1B, water, and the specific element source are mixed with each other.

The specific element source used in the step 2B is the same as the specific element source used in the step 1A.

An amount of the specific element source used in the step 2B is preferably 1 to 300 parts by mass and more preferably 100 to 200 parts by mass with respect to 100 parts by mass of the product obtained in the step 1B.

A procedure of the step 2B is not particularly limited, and may be a method (method 1) of collectively mixing the product obtained in the step 1B, water, and the specific element source; a method (method 2) of producing a dispersion liquid by mixing the product obtained in the step 1B with water, and then mixing the obtained dispersion liquid with the specific element source; a method (method 3) of preparing a dispersion liquid 1 by mixing the product obtained in the step 1B with water, preparing a solution 2 by mixing the specific element source with water, and then mixing the dispersion liquid 1 with the solution 2; or a method (method 4) of, after producing the solution 2, mixing the product obtained in the step 1B with the solution 2. In a case where the product obtained in the step 1B is mixed with water, a dispersion treatment such as an ultrasonic treatment may be appropriately performed.

The procedures of the step 3B and the step 3A are the same.

### (Steps 1C to 3C)

Another suitable aspect of the method for producing the sodium-based solid electrolyte according to the embodiment of the present invention is preferably a production method including the following steps 1C to 3C.
Step 1C: step of subjecting a sodium-based oxide containing Na and B to a mechanical milling treatment
Step 2C: step of mixing the product obtained in the step 1C with water
Step 3C: step of mixing a product obtained by removing water from the dispersion liquid obtained in the step 2C with the specific element source to obtain a sodium-based solid electrolyte

The procedures of the step 1C and the step 1B are the same.

The procedures of the step 2C and the step 2A are the same.

The difference between the step 3C and the step 3A is exemplified that the product obtained by removing water from the dispersion liquid obtained in the step 2C and the specific element source are mixed with each other. In the step 3C, the method of removing water from the dispersion liquid obtained in the step 2C is the same as that in the step 3A, including the preferred aspect.

The specific element source used in the step 3C is the same as the specific element source used in the step 1A.

An amount of the specific element source used in the step 3C is preferably 1 to 300 parts by mass and more preferably 100 to 200 parts by mass with respect to 100 parts by mass of the product obtained by removing water from the dispersion liquid obtained in the step 2C.

The method of mixing the product obtained by removing water from the dispersion liquid obtained in the step 2C with the specific element source is not particularly limited, and a method of infusing the product with a solution obtained by dissolving the specific element source in water to mix the two may be adopted.

That is, examples of a suitable aspect of the method for producing the sodium-based solid electrolyte according to the embodiment of the present invention include a production method including a step 1 of subjecting a sodium-based oxide containing Na and B to a mechanical milling treatment a step 2 of mixing the product obtained in the step 1 with water, and a step 3 of removing water from the dispersion liquid obtained in the step 2 to obtain a sodium-based solid electrolyte, in which any one of requirements 1 to 3 described later is satisfied.
Requirement 1: the mechanical milling treatment of the step 1 is performed in the presence of the specific element source
Requirement 2: in the step 2, the product, the water, and the specific element source are mixed with each other
Requirement 3: in the step 3, the product obtained by removing water from the dispersion liquid obtained in the step 2 is mixed with the specific element source to obtain the sodium-based solid electrolyte

Preferred aspects of the treatment performed in each step, the components used, and the like are as described above. As described above, by adjusting the amount of water removed, the content of water contained in the sodium-based solid electrolyte can be appropriately adjusted.

### <Dispersion liquid>

The dispersion liquid according to the present invention contains the above-described sodium-based solid electrolyte according to the embodiment of the present invention, and a solvent (for example, an organic solvent or water). The dispersion liquid according to the present invention is liquid, can be applied onto various objects to be coated, and is useful for producing a solid electrolyte layer.

In the present specification, the dispersion liquid according to the present invention means an aspect in which a content of the solvent in the dispersion liquid is 80% by mass or more.

The dispersion liquid according to the present invention may contain a component other than the sodium-based solid electrolyte according to the embodiment of the present invention and the solvent.

Examples of other components include a binder.

Examples of the binder include various organic polymeric compounds (polymers).

The organic polymeric compound constituting the binder may be in a particle shape or may be in a non-particle shape.

Examples of the binder include a water-soluble binder.

Examples of the water-soluble binder include a polymer including a repeating unit having a structure including a hydroxy group, and the above polymer in which at least a part of hydroxy groups is substituted with at least one selected from the group consisting of an alkyl group, a hydroxyalkyl group, and a carboxyalkyl group. Examples of the above-described water-soluble binder include carboxymethyl cellulose.

In addition, examples of the other components include a solid electrolyte other than the sodium-based solid electrolyte according to the embodiment of the present invention. Other solid electrolytes mean a solid electrolyte in which ions can be moved therein. The solid electrolyte is preferably an inorganic solid electrolyte.

Examples of the other solid electrolytes include a sulfide-based inorganic solid electrolyte solid electrolyte, an oxide-based inorganic solid electrolyte, a halide-based inorganic solid electrolyte, and a hydride-based solid electrolyte.

A method for producing the dispersion liquid according to the present invention is not particularly limited, and examples thereof include a production method including the step 1A and the step 2A described above, and a production method including the step 1B and the step 2B.

### <Applications>

The sodium-based solid electrolyte according to the embodiment of the present invention exhibits excellent ion conductivity, and thus can be applied to various applications. The sodium-based solid electrolyte according to the embodiment of the present invention can be used for, for example, various batteries (for example, a solid-state secondary battery, a solid-state oxide fuel cell, and solid oxide steam electrolysis). Among these, the sodium-based solid electrolyte according to the embodiment of the present invention is preferably used for a solid-state sodium ion secondary battery.

More specifically, the sodium-based solid electrolyte according to the embodiment of the present invention is preferably used for forming a solid electrolyte contained in at least any one of a positive electrode active material layer, a solid electrolyte layer, or a negative electrode active material layer in a solid-state secondary battery. Among these, the sodium-based solid electrolyte according to the embodiment of the present invention is preferably used for forming a solid electrolyte contained in a positive electrode active material layer, a solid electrolyte layer, a negative electrode active material layer, or the like in a solid-state sodium ion secondary battery. In addition, the sodium-based solid electrolyte according to the embodiment of the present invention is preferably used as a solid electrolyte contained in any one of a positive electrode active material layer, a solid electrolyte layer, or a negative electrode active material layer in a solid-state sodium ion secondary battery.

In addition, the sodium-based solid electrolyte according to the embodiment of the present invention is suitably used as a coating material which coats a surface of the positive electrode active material. That is, examples of one suitable aspect of the present invention include a modified positive electrode active material which includes a positive electrode active material and a coating layer disposed on the positive electrode active material, in which the coating layer contains the sodium-based solid electrolyte according to the embodiment of the present invention.

Furthermore, the sodium-based solid electrolyte according to the embodiment of the present invention is suitably used as a coating material which coats a surface of the negative electrode active material. That is, examples of one suitable aspect of the present invention include a modified negative electrode active material which includes a negative electrode active material and a coating layer disposed on the negative electrode active material, in which the coating layer contains the sodium-based solid electrolyte according to the embodiment of the present invention.

In a case of using the sodium-based solid electrolyte according to the embodiment of the present invention, it is preferable to subject the sodium-based solid electrolyte according to the embodiment of the present invention to a pressurization treatment, and mold the sodium-based solid electrolyte into a predetermined shape for use.

A method of the pressurization treatment is not particularly limited, and examples thereof include a method using a known press device.

A pressurizing force at the time of the pressurization treatment is not particularly limited, and the optimum pressure is appropriately selected; but from the viewpoint that the effect of the present invention is more excellent, it is preferably 5 to 1,500 MPa and more preferably 10 to 600 MPa.

A time of the pressurization treatment is not particularly limited, but from the viewpoint that the effect of the present invention is more excellent and the viewpoint of productivity, it is preferably 1 sec to 0.5 hours and more preferably 2 sec to 0.2 hours.

In addition, a heating treatment may be performed at the time of the pressurization treatment. A heating temperature at the time of the heating treatment is not particularly limited, but it is preferably 40°C to 400°C and more preferably 50°C to 350°C. A heating time at the time of the heating treatment is preferably 1 minute to 6 hours.

The atmosphere during the pressurization is not particularly limited, and examples thereof include an atmosphere of atmospheric air, an atmosphere of dried air (dew point: -20°C or lower), and an atmosphere of inert gas (for example, argon, helium, or nitrogen).

The ion conductivity (27°C) of the sodium-based solid electrolyte according to the embodiment of the present invention is not particularly limited, and from the viewpoint of application to various applications, it is preferably 1.0 × 10⁻⁶ S/cm or more, and more preferably 1.0 × 10⁻⁴ S/cm or more. The upper limit thereof is not particularly limited, but is usually 1.0 × 10⁻² S/cm or less.

The dispersion liquid containing the sodium-based solid electrolyte according to the embodiment of the present invention can be suitably used as a dispersion liquid for forming a solid electrolyte layer.

A method of forming a solid electrolyte layer using the above-described dispersion liquid for forming a solid electrolyte layer is not particularly limited, and examples thereof include a method of applying the dispersion liquid for forming a solid electrolyte layer onto a target object to form a solid electrolyte layer. As necessary, the formed coating film may be subjected to a pressurization treatment.

A coating method of the dispersion liquid for forming a solid electrolyte layer is not particularly limited, and examples thereof include spray coating, spin coating, dip coating, slit coating, stripe coating, an aerosol deposition method, thermal spraying, and bar coating.

After applying the dispersion liquid for forming a solid electrolyte layer, the obtained coating film may be subjected to a drying treatment as necessary. A drying temperature is not particularly limited, and the lower limit thereof is preferably 30°C or higher, more preferably 60°C or higher, and still more preferably 80°C or higher. The upper limit of the drying temperature is preferably 300°C or lower and more preferably 250°C or lower.

A method of subjecting the coating film to a pressurization treatment is not particularly limited, and examples thereof include a method using a known press device (for example, a hydraulic cylinder pressing machine).

A pressurizing force at the time of the pressurization treatment is not particularly limited, but from the viewpoint that the ion conductivity of the solid electrolyte layer to be formed is more excellent, it is preferably 5 to 1,500 MPa and more preferably 300 to 600 MPa.

A time of the pressurization treatment is not particularly limited, but from the viewpoint that the ion conductivity of the solid electrolyte layer to be formed is more excellent and the viewpoint of productivity, it is preferably 1 to 6 hours and more preferably 1 to 20 minutes.

In addition, a heating treatment may be performed at the time of the pressurization treatment. A heating temperature at the time of the heating treatment is not particularly limited, but it is preferably 30 to 300°C; and a heating time is more preferably 1 minute to 6 hours.

The atmosphere during the pressurization is not particularly limited, and examples thereof include an atmosphere of atmospheric air, an atmosphere of dried air (dew point: -20°C or lower), and an atmosphere of inert gas (for example, argon, helium, or nitrogen).

### (Composition for forming electrode)

The sodium-based solid electrolyte according to the embodiment of the present invention is also preferably used as a component of a composition for forming an electrode. That is, the composition for forming an electrode is preferably a composition containing the above-described sodium-based solid electrolyte according to the embodiment of the present invention, and an active material.

A mixing proportion of the sodium-based solid electrolyte and the active material in the composition for forming an electrode is not particularly limited, but a content ratio of the sodium-based solid electrolyte to the active material (mass of sodium-based solid electrolyte/mass of active material) is preferably 0.01 to 50 and more preferably 0.05 to 20.

The sodium-based solid electrolyte contained in the composition for forming an electrode is as described above.

Examples of the active material include a positive electrode active material and a negative electrode active material. Hereinafter, the active material will be described in detail.

### (Negative electrode active material)

The negative electrode active material is not particularly limited as long as it is an active material capable of reversibly intercalating and deintercalating sodium ions. Examples of the negative electrode active material include a carbonaceous material and an oxide of a metal element or a metalloid element.

The carbonaceous material used as the negative electrode active material is a material substantially consisting of carbon. As the carbonaceous material, a non-graphitizable carbonaceous material (hereinafter, also referred to as "hard carbon") is preferable.

The above-described carbonaceous material can be obtained by, for example, baking petroleum pitch, carbon black such as acetylene black (AB), graphite (natural graphite and artificial graphite such as vapor-grown graphite), or various synthetic resins such as a polyacrylonitrile (PAN)-based resin and a furfuryl alcohol resin.

The oxide of a metal element or a metalloid element, which can be used as the negative electrode active material, is not particularly limited as long as it is an oxide capable of intercalating and deintercalating sodium; and examples thereof include Na₂Ti₃O₇ and Na₃Ti₂(PO₄)₃.

A shape of the negative electrode active material is not particularly limited, but is preferably a particle shape. A volume average particle size of the negative electrode active material is not particularly limited, and it is preferably 0.1 to 60 µm, more preferably 0.5 to 20 µm, and still more preferably 1.0 to 15 µm.

The volume average particle size is measured according to the following procedure.

Using water (in a case of being unstable in water, heptane), the negative electrode active material is diluted in a 20 mL sample bottle to prepare a 1% by mass dispersion liquid. The diluted dispersion liquid sample is irradiated with 1 kHz ultrasonic waves for 10 minutes, and then immediately used for test. Data collection is performed 50 times with the dispersion liquid sample using a laser diffraction/scattering-type particle size distribution analyzer and a quartz cell for measurement at a temperature of 25°C, thereby obtaining the volume average particle size. Other detailed conditions and the like can be found in JIS Z8828: 2013 "Particle Diameter Analysis-Dynamic Light Scattering", as necessary. Five samples are produced for each level, and the average value thereof is adopted.

One kind of the negative electrode active material may be used alone, or two or more kinds thereof may be used in combination.

### (Positive electrode active material)

The positive electrode active material is not particularly limited as long as it is an active material capable of reversibly intercalating and/or deintercalating sodium ions. Examples of the positive electrode active material include a transition metal oxide containing at least a transition metal element; and a transition metal oxide containing at least one transition metal element selected from Cr, Fe, Mn, Co, or Ni is preferable.

Examples of the transition metal oxide which acts as the positive electrode active material include Na₂Fe₂(SO₄)₃, Na₇V₄(PO₄)P₂O₇, Na₄CO₃(PO₄)₂P₂O₇, Na₄MnCr(PO₄)₃, NaMO₂ (M represents a transition metal element; for example, NaFe_{1/2}, Ni_{1/2}O₂, or the like), Na_{2/3}Mn_{1/2}Fe_{1/2}O₂, Na₂Mn₃O₇, Na_{2/3}Mg_{0.28}Mn_{0.72}O₂, Na₂RuO₃, Na_{1.3}Nb_{0.3}Mn_{0.4}O₂, Na_{0.6}Li_{0.2}Mn_{0.8}O₂, Na₂Mn[Fe(CN)₆], and β-NaMnO₂.

A shape of the positive electrode active material is not particularly limited, but is preferably a particle shape. A volume average particle size of the positive electrode active material is not particularly limited, but is preferably 0.1 to 50 µm. The volume average particle size of the positive electrode active material particles can be measured in the same manner as the volume average particle diameter of the negative electrode active material described above.

A positive electrode active material obtained using a baking method may be used after being washed with water, an acidic aqueous solution, an alkaline aqueous solution, or an organic solvent.

One kind of the positive electrode active material may be used alone, or two or more kinds thereof may be used in combination.

The composition for forming an electrode may contain a component other than the sodium-based solid electrolyte and the active materials.

The composition for forming an electrode may contain a conductive auxiliary agent.

As the conductive auxiliary agent, a conductive auxiliary agent which is known as a general conductive auxiliary agent can be used. Examples of the conductive auxiliary agent include graphite such as natural graphite and artificial graphite, carbon black such as acetylene black, Ketjen black, and furnace black, amorphous carbon such as needle cokes, carbon fiber such as vapor-grown carbon fiber and carbon nanotube, and a carbonaceous material such as graphene and fullerene, which are electron-conductive materials. Furthermore, a conductive polymer such as polyaniline, polypyrrole, polythiophene, polyacetylene, and a polyphenylene derivative may also be used.

In addition to the above-described conductive auxiliary agent, a general conductive auxiliary agent containing no carbon atom, such as metal powder and metal fiber, may be used.

The conductive auxiliary agent refers to a conductive auxiliary agent which does not cause the intercalation and deintercalation of Na at the time of charging and discharging of the battery, and does not function as an active material. As a result, among conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

In addition, examples of the other components also include the above-described binder and sodium salt.

The composition for forming an electrode may contain a dispersion medium.

Examples of the dispersion medium include water and various organic solvents.

The composition for forming an electrode may contain, as a component other than the above-described respective components, a component selected from the group consisting of an ionic liquid, a thickener, a crosslinking agent (a crosslinking agent that undergoes a crosslinking reaction by radical polymerization, condensation polymerization, or ring-opening polymerization), a polymerization initiator (a polymerization initiator that generates an acid or a radical by heat or light), an antifoaming agent, a leveling agent, a dehydrating agent, and an antioxidant.

The method of forming an electrode (a negative electrode active material layer and a positive electrode active material layer) using the above-described composition for forming an electrode is not particularly limited, and examples thereof include a method of applying the composition for forming an electrode to form an electrode. As necessary, the formed coating film may be subjected to a pressurization treatment.

A coating method of the composition for forming an electrode is not particularly limited, and examples thereof include spray coating, spin coating, dip coating, slit coating, stripe coating, an aerosol deposition method, thermal spraying, and bar coating.

After applying the composition for forming an electrode, the obtained coating film may be subjected to a drying treatment as necessary. A drying temperature is not particularly limited, and the lower limit thereof is preferably 30°C or higher, more preferably 60°C or higher, and still more preferably 80°C or higher. The upper limit of the drying temperature is preferably 300°C or lower and more preferably 250°C or lower.

A method of subjecting the coating film to a pressurization treatment is not particularly limited, and examples thereof include a method using a known press device (for example, a hydraulic cylinder pressing machine).

A pressurizing force at the time of the pressurization treatment is not particularly limited, but it is preferably 5 to 1,500 MPa and more preferably 300 to 600 MPa.

A time of the pressurization treatment is not particularly limited, but from the viewpoint of productivity, it is preferably 1 minute to 6 hours and more preferably 1 to 20 minutes.

In addition, a heating treatment may be performed at the time of the pressurization treatment. A heating temperature at the time of the heating treatment is not particularly limited, but it is preferably 30 to 300°C; and a heating time is preferably 1 minute to 6 hours.

The atmosphere during the pressurization is not particularly limited, and examples thereof include an atmosphere of atmospheric air, an atmosphere of dried air (dew point: -20°C or lower), and an atmosphere of inert gas (for example, argon, helium, or nitrogen).

### <Solid electrolyte sheet>

The sodium-based solid electrolyte according to the embodiment of the present invention may be contained in a solid electrolyte sheet.

The solid electrolyte sheet is preferably used as a solid electrolyte sheet for a solid-state battery.

The solid electrolyte sheet can be formed by molding the sodium-based solid electrolyte according to the embodiment of the present invention into a sheet shape. The molding method is not particularly limited, and for example, a dispersion liquid containing the sodium-based solid electrolyte according to the embodiment of the present invention may be subjected to press molding to form a sheet.

### <Electrode sheet for solid-state secondary battery>

The sodium-based solid electrolyte according to the embodiment of the present invention may be contained in an electrode sheet for a solid-state secondary battery. In particular, the sodium-based solid electrolyte according to the embodiment of the present invention may be contained in an electrode sheet for a solid-state sodium ion secondary battery.

Hereinafter, the electrode sheet for a solid-state sodium ion secondary battery will be described in detail.

The electrode sheet for a solid-state sodium ion secondary battery according to the embodiment of the present invention is a sheet-shaped molded body capable of forming an electrode active material layer of a solid-state sodium ion secondary battery, and is preferably used for an electrode or a laminate of an electrode and a solid electrolyte layer.

It is sufficient that the electrode sheet for a solid-state sodium ion secondary battery according to the embodiment of the present invention (also simply referred to as "electrode sheet") is an electrode sheet including an active material electrode layer (hereinafter, simply also referred to as "active material electrode layer") selected from the group consisting of a negative electrode active material layer and a positive electrode active material layer, and it may be a sheet in which the active material electrode layer is formed on a substrate (collector) or may be a sheet which is formed from the active material electrode layer without including the substrate. The electrode sheet is typically a sheet including the collector and the active material electrode layer, and examples thereof include an aspect including the collector, the active material electrode layer, and the solid electrolyte layer in this order, and an aspect including the collector, the active material electrode layer, the solid electrolyte layer, and the active material electrode layer in this order.

The electrode sheet according to the embodiment of the present invention may include a layer other than the above-described layers. A layer thickness of each of the layers constituting the electrode sheet according to the embodiment of the present invention is the same as a layer thickness of each of the layers described later regarding the solid-state sodium ion secondary battery.

In the sheet for a solid-state sodium ion secondary battery according to the embodiment of the present invention, at least one of the active material electrode layers contains the sodium-based solid electrolyte according to the embodiment of the present invention.

A manufacturing method of the electrode sheet for a solid-state sodium ion secondary battery according to the embodiment of the present invention is not particularly limited, and for example, the electrode sheet for a solid-state sodium ion secondary battery according to the embodiment of the present invention can be manufactured by forming the active material electrode layer using the composition for forming an electrode according to the embodiment of the present invention.

Examples thereof include a method of applying the composition for forming an electrode onto a collector (another layer may be interposed therebetween) to form a coating film, and subjecting the coating film to a pressurization treatment.

Examples of the method of applying the composition for forming an electrode and the method of subjecting the coating film to a pressurization treatment include the methods described in the composition for forming an electrode.

### <Solid-state secondary battery>

The solid-state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to constitute a positive electrode. The negative electrode active material layer is preferably formed on a negative electrode collector to constitute a negative electrode.

It is preferable that at least one layer of the negative electrode active material layer, the positive electrode active material layer, or the solid electrolyte layer contains the sodium-based solid electrolyte according to the embodiment of the present invention.

In addition, the present invention also relates to an electrode for a solid-state secondary battery, including an active material layer containing the sodium-based solid electrolyte according to the embodiment of the present invention, and a collector.

Hereinafter, the solid-state sodium ion secondary battery according to the embodiment of the present invention will be described in detail.

The solid-state sodium ion secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to constitute a positive electrode. The negative electrode active material layer is preferably formed on a negative electrode collector to constitute a negative electrode. At least one layer of the negative electrode active material layer, the positive electrode active material layer, or the solid electrolyte layer contains the sodium-based solid electrolyte according to the embodiment of the present invention.

A thickness of each of the negative electrode active material layer, the solid electrolyte layer, and the positive electrode active material layer is not particularly limited. In consideration of a dimension of a general solid-state sodium ion secondary battery, the thickness of each of the layers is preferably 10 to 1,000 µm, and more preferably 20 µm or more and less than 500 µm.

The thickness of at least one of the positive electrode active material layer or the negative electrode active material layer is still more preferably 50 µm or more and less than 500 µm.

Each of the positive electrode active material layer and the negative electrode active material layer may include a collector on a side opposite to the solid electrolyte layer.

Depending on applications, the solid-state sodium ion secondary battery according to the embodiment of the present invention may be used as a solid-state sodium ion secondary battery in the above-described structure, but it is preferable to be used by being enclosed in a more appropriate housing in order to be in a form of a dry cell.

The housing may be a metallic housing or a resin (plastic) housing. Examples of the metallic housing include a housing of an aluminum alloy and a housing made of stainless steel. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

Hereinafter, a solid-state sodium ion secondary battery according to an example of a preferred embodiment of the present invention will be described with reference to Fig. 1, but the present invention is not limited thereto.

Fig. 1 is a cross-sectional view schematically showing the solid-state sodium ion secondary battery according to the example of the preferred embodiment of the present invention. A solid-state sodium ion secondary battery 10 shown in Fig. 1 includes a negative electrode collector 1, a negative electrode active material layer 2, a solid electrolyte layer 3, a positive electrode active material layer 4, and a positive electrode collector 5 in this order as viewed from the negative electrode side.

At least one layer of the negative electrode active material layer 2, the positive electrode active material layer 4, or the solid electrolyte layer 3 contains the sodium-based solid electrolyte according to the embodiment of the present invention.

The respective layers are in contact with each other to form an adjacent structure. By adopting such a structure, during charging, electrons (e⁻) are supplied to the negative electrode side, and sodium ions (Na⁺) are accumulated in the negative electrode. On the other hand, during discharging, sodium ions (Na⁺) accumulated in the negative electrode are returned to the positive electrode side, and electrons are supplied to an operation portion 6. In the illustrated example, an electric bulb is employed as a model of the operation portion 6, and is lit by the discharging.

The negative electrode active material layer 2 contains the above-described negative electrode active material.

The positive electrode active material layer 4 contains the above-described positive electrode active material.

The positive electrode collector 5 and the negative electrode collector 1 are preferably an electron conductor.

Examples of a material for forming the positive electrode collector include aluminum, an aluminum alloy, stainless steel, nickel, and titanium; and aluminum or an aluminum alloy is preferable. Examples of the positive electrode collector include a collector obtained by subjecting a surface of aluminum or stainless steel to a treatment with carbon, nickel, titanium, or silver (collector on which a thin film is formed).

Examples of a material for forming the negative electrode collector include aluminum, copper, a copper alloy, stainless steel, nickel, and titanium; and aluminum, copper, a copper alloy, or stainless steel is preferable. Examples of the negative electrode collector include a collector obtained by subjecting a surface of aluminum, copper, a copper alloy, or stainless steel to a treatment with carbon, nickel, titanium, or silver.

A shape of the collector is often a film shape or a sheet shape, but may be another shape.

A thickness of the collector is not particularly limited, but is preferably 1 to 500 µm.

In addition, protrusions and recesses are preferably provided on a surface of the collector by performing a surface treatment.

A manufacturing method of the above-described solid-state sodium ion secondary battery is not particularly limited, and examples thereof include known methods. Among these, a method using the above-described composition for forming an electrode and/or dispersion liquid for forming a solid electrolyte layer is preferable.

For example, a composition for forming a positive electrode, which contains a positive electrode active material, is applied onto a metal foil which is a positive electrode collector to form a positive electrode active material layer; a dispersion liquid for forming a solid electrolyte layer is subsequently applied onto this positive electrode active material layer to form a solid electrolyte layer; a composition for forming a negative electrode, which contains a negative electrode active material, is further applied onto the solid electrolyte layer to form a negative electrode active material layer; and a negative electrode collector (metal foil) is superimposed on the negative electrode active material layer to subject the obtained laminate to a pressurization treatment, whereby it is possible to obtain a solid-state sodium ion secondary battery having a structure in which the solid electrolyte layer is sandwiched between the positive electrode active material layer and the negative electrode active material layer. The battery can be enclosed in a housing to obtain a desired solid-state sodium ion secondary battery.

In addition, the solid-state sodium ion secondary battery can also be manufactured by reversing the method of forming each layer, which includes forming the negative electrode active material layer, the solid electrolyte layer, and the positive electrode active material layer on the negative electrode collector, and superimposing the positive electrode collector thereon.

In addition, as another method, the solid-state sodium ion secondary battery may be manufactured by separately producing the positive electrode active material layer, the solid electrolyte layer, and the negative electrode active material layer, and laminating these layers.

It is preferable that the solid-state sodium ion secondary battery is initialized after production or before use. The initialization method is not particularly limited, and it is possible to initialize the solid-state sodium ion secondary battery by, for example, performing initial charging and discharging in a state in which a pressing pressure is increased and then releasing the pressure until the general use pressure of the solid-state sodium ion secondary battery.

### (Applications of solid-state secondary battery)

The solid-state secondary battery (particularly, the solid-state sodium ion secondary battery) according to the embodiment of the present invention can be applied to various applications. The application aspect is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, in a case of being used for consumer applications, examples thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the secondary battery according to the embodiment of the present invention can be used for various military usages and universe usages. In addition, the secondary battery according to the embodiment of the present invention can also be combined with a solar battery.

### Examples

Hereinafter, features of the present invention will be described in more detail with reference to Examples and Comparative Examples. The materials, amounts used, proportions, treatment details, treatment procedure, and the like shown in the following Examples can be appropriately changed without departing from the spirit and scope of the present invention. Accordingly, the scope of the present invention should not be construed as being limited by the specific examples given below.

### <Example 1>

Using a ball mill (P-7 manufactured by FRITSCH), Na₂B₄O₇ (247) powder was subjected to ball milling under the following conditions, pot: stabilized zirconia (YSZ) (45 mL), pulverization ball: stabilized zirconia (YSZ) (average particle diameter: 5 mm, number of balls: 50), rotation speed: 370 revolutions per minute (rpm), amount of NBO powder (powdery Na₂B₄O₇ crystals): 1 g, atmosphere: air, and treatment time of ball milling: 100 hours, thereby obtaining a sodium compound.

0.05 g of Na(FSO₂)₂N (NaFSI) as a Na salt was added to the obtained sodium compound, and the mixture was further ball-milled for 100 hours. The obtained powder was added to water such that a powder concentration was 42% by mass, and the mixture was subjected to ultrasonic dispersion for 30 minutes.

Subsequently, the obtained dispersion liquid was transferred to a glass petri dish, and dried at 120°C for 2 hours in the air to obtain a film of sodium-based solid electrolyte. Subsequently, the obtained film was peeled off to obtain powder of a sodium-based solid electrolyte.

Regarding the analysis of each of elements in the obtained sodium-based solid electrolyte, quantitative analysis was performed by ICP-OES for sodium and boron or by combustion ion chromatography (combustion IC) for fluorine and sulfur, estimation was performed for N from the analytical mass of sulfur in consideration of the amount of each of atoms in the Na salt, the analytical masses of elements other than O were added together for O, and calculation was performed in terms of the difference from the total amount of the powder. The results are shown in the tables described later.

### <Example 2>

Using a ball mill (P-7 manufactured by FRITSCH), Na₂B₄O₇ (247) powder was subjected to ball milling under the following conditions, pot: stabilized zirconia (YSZ) (45 mL), pulverization ball: stabilized zirconia (YSZ) (average particle diameter: 5 mm, number of balls: 50), rotation speed: 370 revolutions per minute (rpm), amount of NBO powder (powdery Na₂B₄O₇ crystals): 1 g, atmosphere: air, and treatment time of ball milling: 100 hours, thereby obtaining a sodium compound.

1.5 g of the obtained sodium compound was added to 2.76 g of pure water, and mixed with a stirrer. A solution obtained by dissolving 1.66 g of Na(FSO₂)₂N (NaFSI) in 0.35 g of pure water was added dropwise to the obtained mixture, and mixed. The obtained slurry was applied onto an Al foil using a film applicator, and the Al foil with a coating film was stored in a desiccator with a relative humidity of 3% overnight to dry the coating film. The dried film was scraped off with a spatula to obtain powder of a sodium solid electrolyte.

### <Example 3>

Using a ball mill (P-7 manufactured by FRITSCH), Na₂B₄O₇ (247) powder was subjected to ball milling under the following conditions, pot: stabilized zirconia (YSZ) (45 mL), pulverization ball: stabilized zirconia (YSZ) (average particle diameter: 5 mm, number of balls: 50), rotation speed: 370 revolutions per minute (rpm), amount of NBO powder (powdery Na₂B₄O₇ crystals): 1 g, atmosphere: air, and treatment time of ball milling: 100 hours, thereby obtaining a sodium compound.

1.0 g of the obtained sodium compound and 0.04 g of carboxymethyl cellulose were lightly mixed in a mortar, and the obtained mixture was added to a solution obtained by dissolving 0.8 g of Na(FSO₂)₂N (NaFSI) in 3.0 g of pure water, and mixed with a stirrer. The obtained slurry was applied onto an Al foil using a film applicator, and the Al foil with a coating film was stored in a desiccator with a relative humidity of 3% overnight to dry the coating film. The dried film was scraped off with a spatula to obtain powder of a sodium solid electrolyte.

The ion conductivity of the sodium-based solid electrolyte obtained in Example 2, which was measured by a method described later, was 1 × 10⁻⁴ S/cm. The ion conductivity of the sodium-based solid electrolyte obtained in Example 3, which was measured by a method described later, was 1 × 10⁻⁴ S/cm.

### <Comparative Example 1>

Powdery Na₂B₄O₇·decahydrate crystals (NBO powder) (crystal powder, not in an amorphous state) manufactured by FUJIFILM Wako Pure Chemical Corporation were subjected to powder compaction molding at 27°C (room temperature) and an effective pressure of 220 MPa to obtain a compacted powder body for comparison. The ion conductivity of the obtained compacted powder body could not be detected.

### <Reference Example>

Using a ball mill (P-7 manufactured by FRITSCH), Na₂B₄O₇ (NBO) powder was subjected to ball milling under the following conditions, pot: stabilized zirconia (YSZ) (45 mL), pulverization ball: stabilized zirconia (YSZ) (average particle diameter: 5 mm, number of balls: 50), rotation speed: 500 rpm, amount of NBO powder (powdery Na₂B₄O₇ crystals): 2 g, atmosphere: air, and treatment time of ball milling: 100 hours, thereby obtaining a sodium compound.

### <Various evaluations>

### (Measurement of ion conductivity)

The sodium-based solid electrolyte obtained in each of Examples was subjected to powder compaction molding at room temperature (27°C) and an effective pressure of 30 MPa to obtain a compacted powder body. Al foils were respectively installed on a front surface and a back surface of the obtained compacted powder body, and the ion conductivity was estimated from the analysis of the arc diameter of Cole-Cole plot (Nyquist plot) obtained by measuring the alternating current impedance (measurement temperature: 27°C, applied voltage: 50 mV, measurement frequency range: 1Hz to 1 MHz) with the two Al electrodes being interposed.

In the column of "Ion conductivity" in the tables described later, a case where the obtained ion conductivity was 10⁻⁶ S/cm or more is indicated by "A", and a case where the obtained ion conductivity was less than 10⁻⁶ S/cm is indicated by "B".

### (X-ray diffraction measurement)

X-ray diffraction measurement was performed on each of the sodium-based solid electrolytes obtained in Examples 1 to 3 and the crystal powder of Comparative Example using a CuKα ray. The measurement conditions were set to 0.01 °/step and 3 °/min.

In the obtained diffraction pattern, a case where a peak derived from the Na₂B₄O₇ crystals was not present (that is, a case where a peak derived from the sodium tetraborate crystals, in which the peak top was located in a range where a diffraction angle 2θ was 5.0° to 70.0° and the intensity ratio obtained by the above-described intensity measuring method was 10.0 or more, did not appear) is indicated by "A", and a case where a peak derived from the Na₂B₄O₇ crystals was present (that is, a case where a peak in which the intensity ratio was 10. or more appeared) was indicated by "B". The measurement results are shown in Table 2 described later.

In the X-ray diffraction patterns of the sodium-based solid electrolytes obtained in Examples 1 to 3, all intensity ratios of the peak derived from the sodium tetraborate crystal, appearing in a diffraction angle 2θ range of 5.0° to 70.0°, was less than 2.0.

In the table, the column of "Element analysis" indicates the composition of the sodium-based solid electrolyte obtained in each of Examples, and represents the molar content amount of each element as a relative value in a case where the content of B is set to "4.0". The molar content amount of each element described in the table is a numerical value obtained by rounding off the second decimal place.

In Examples 1 to 3, as a result of subjecting the sodium compound obtained by subjecting the Na₂B₄O₇ powder to the ball milling treatment to an X-ray diffraction measurement, a peak derived from the Na₂B₄O₇ crystal, in which the intensity ratio to the average intensity was 10.0 or more, did not appear in a range where the diffraction angle 2θ of the obtained diffraction pattern was 5.0° to 70.0°. The measurement conditions of the X-ray diffraction measurement were set to 0.01 °/step and 3 °/min.

**[Table 1]**

| | Element analysis | | | | | | Molar ratio | | |
|---|---|---|---|---|---|---|---|---|---|
| | Na | B | O | F | S | N | NBO | NaFSI | Water |
| Example 1 | 2.1 | 4.0 | 11.2 | 0.1 | 0.1 | 0.1 | 1 | 0.05 | 4 |
| Example 2 | 3.0 | 4.0 | 21.0 | 1.8 | 1.9 | 0.9 | 1 | 0.9 | 10 |
| Example 3 | 3.0 | 4.0 | 21.3 | 1.5 | 1.6 | 0.8 | 1 | 0.8 | 11 |

**[Table 2]**

| | X-ray diffraction measurement | Ion conductivity (S/cm) |
|---|---|---|
| Example 1 | A | A |
| Example 2 | A | A |
| Example 3 | A | A |
| Comparative Example 1 | B | Undetectable |

As shown in the above tables, the sodium-based solid electrolyte according to the embodiment of the present invention exhibited a desired effect.

### Explanation of References

1: negative electrode collector
2: negative electrode active material layer
3: solid electrolyte layer
4: positive electrode active material layer
5: positive electrode collector
6: operation portion
10: solid-state sodium ion secondary battery

## Claims

1. A sodium-based solid electrolyte comprising:
amorphous sodium tetraborate;
water; and
a sodium salt.

2. The sodium-based solid electrolyte according to claim 1,
wherein a molar ratio of the sodium salt to the sodium tetraborate is 0.001 to 1.5, and
a molar ratio of the water to the sodium tetraborate is 1 to 15.

3. The sodium-based solid electrolyte according to claim 1,
wherein the sodium salt is a compound represented by Formula (1),
Formula (1) NaN(R_{f1}SO₂)(R_{f2}SO₂)
R_{f1} and R_{f2} each independently represent a fluorine atom or a perfluoroalkyl group.

4. A sodium-based solid electrolyte containing Na, B, and O,
wherein the sodium-based solid electrolyte further contains one or more specific elements selected from the group consisting of an element of Group 4 of the periodic table, an element of Group 15 of the periodic table, an element of Group 16 of the periodic table, an element of Group 17 of the periodic table, Si, C, Sc, and Y, and
in a case where molar amounts of Na, O, and the specific elements in the sodium-based solid electrolyte are represented by setting a molar amount of B to 4.0, the molar amount of Na is 1.6 to 3.5, the molar amount of O is 6.2 to 25.0, and each molar amount of the specific elements is 0.01 to 10.0.

5. A method for producing the sodium-based solid electrolyte according to any one of claims 1 to 4, the method comprising:
a step 1 of subjecting a sodium-based oxide containing Na and B to a mechanical milling treatment;
a step 2 of mixing the product obtained in the step 1 with water; and
a step 3 of removing water from the dispersion liquid obtained in the step 2 to obtain the sodium-based solid electrolyte,
wherein any one of the following requirements 1 to 3 is satisfied,
the requirement 1: the mechanical milling treatment of the step 1 is performed in a presence of a specific element source containing two or more elements selected from the group consisting of F, Cl, Br, I, S, P, Si, Se, Te, C, Sb, As, Sc, Y, Zr, Ti, Hf, H, and N,
the requirement 2: in the step 2, the product, the water, and the specific element source are mixed with each other, and
the requirement 3: in the step 3, a product obtained by removing water from the dispersion liquid obtained in the step 2 is mixed with the specific element source to obtain the sodium-based solid electrolyte.

6. The method for producing the sodium-based solid electrolyte according to claim 5,
wherein the requirement 1 is satisfied, and
the method further includes, before the step 1, a step 0 of subjecting a sodium-based oxide containing Na and B to a mechanical milling treatment in an environment in which the specific element source is not present.

7. A modified positive electrode active material comprising:
a positive electrode active material; and
a coating layer disposed on the positive electrode active material,
wherein the coating layer contains the sodium-based solid electrolyte according to any one of claims 1 to 4.

8. A modified negative electrode active material comprising:
a negative electrode active material; and
a coating layer disposed on the negative electrode active material,
wherein the coating layer contains the sodium-based solid electrolyte according to any one of claims 1 to 4.

9. A solid-state secondary battery comprising, in the following order:
a positive electrode active material layer;
a solid electrolyte layer; and
a negative electrode active material layer,
wherein at least one of the positive electrode active material layer, the solid electrolyte layer, or the negative electrode active material layer contains the sodium-based solid electrolyte according to any one of claims 1 to 4.

10. An electrode sheet for a solid-state secondary battery, comprising:
the sodium-based solid electrolyte according to any one of claims 1 to 4.

11. A solid electrolyte sheet comprising:
the sodium-based solid electrolyte according to any one of claims 1 to 4.

12. An electrode for a solid-state secondary battery, comprising:
an active material layer containing an active material and the sodium-based solid electrolyte according to any one of claims 1 to 4; and
a collector.
